(19) Europäisches Patentamt European Patent Office Office européen des brevets

(11) **EP 1 772 439 A2**

(12) **EUROPEAN PATENT APPLICATION**

(43) Date of publication:
**11.04.2007 Bulletin 2007/15**

(21) Application number: **06026873.7**

(22) Date of filing: **18.09.2001**

(51) Int Cl.:
*C03C 1/00* $^{(2006.01)}$    *C03C 3/19* $^{(2006.01)}$
*C03C 3/064* $^{(2006.01)}$    *C03C 25/42* $^{(2006.01)}$
*C04B 28/26* $^{(2006.01)}$

(84) Designated Contracting States:
**AT BE CH CY DE DK ES FI FR GB GR IE IT LI LU MC NL PT SE TR**

(30) Priority: **20.09.2000 US 233985 P**
          **01.06.2001 US 871998**

(62) Document number(s) of the earlier application(s) in accordance with Art. 76 EPC:
**01973239.5 / 1 328 489**

(71) Applicant: **Goodrich Corporation Charlotte, North Carolina 28217 (US)**

(72) Inventors:
• **Cartwright, Craig L. Jacksonville, FL 32226 (US)**
• **Mazany, Anthony M. Amelia Island, FL 32034-8960 (US)**
• **Robinson, John W. Fernandina Beach, FL 32034 (US)**

(74) Representative: **Weber, Thomas von Kreisler Selting Werner, Bahnhofsvorplatz 1, Deichmannhaus am Dom, 50667 Köln (DE)**

Remarks:
This application was filed on 23 - 12 - 2006 as a divisional application to the application mentioned under INID code 62.

(54) **Inorganic matrix compositions and composites incorporating the matrix compsition**

(57) An acidic glass comprising the following formula

$$\prod_{k=1}^{n} \left( (M^{p+})_{q'} (E^{q-})_{p'} \right)_{r_k}$$

where $\Sigma r_k = 1$

where M is a main group glass former and a metallic glass modifier, E is an oxygen, chalcogenide and/or a halogen atom, p is the cation valence of M, q is the anion valence of E, q' is number of M cations contained in a network unit, p' is number of E anions contained in a network unit, r is the molar fraction of that network unit, and n is the number of total network units in the reactive acidic glass component.

## Description

## Background of the Invention

The present invention relates to inorganic matrix compositions incorporating a silicate network, which can be processed at processing conditions comparable to those used for typical high-performance organic polymer processing (temperatures 15°C to 200°C and pressures <200 psi or 1.378 MPa), although a wide range of temperatures and pressures can be employed. The physical and thermal properties of the inorganic matrix binder as well as composites may be enhanced by elevated processing temperatures (up to 400°C and greater) and pressures (up to 20,000 psi (137.895 MPa) and greater) to produce exceptional composite and neat resin components. The composite materials formed at the lower processing conditions exhibit excellent thermal, dimensional, physical and flameproof properties:

Inorganic matrices are useful as flame retardant binders, bulk materials, adhesives or composite materials. As bulk materials, they are used to form shaped objects which when cured provide a structural material. As a composite material, the matrix composition is used to impregnate a fabric, which may be combined with other similarly impregnated fabrics, to form the composite lay-up, which is then shaped and cured to form a shaped object, similar to a bulk material, but with the benefit of the reinforcement provided by the fabric.

The basic concept of composite materials has been known for centuries. Composite materials offer a unique blend of value added features, such as weight savings, electrical insulation, thermal insulation, corrosion resistance, and manufacturing cost savings. These features in some instances can overshadow the material cost in specialized applications ranging, for example, from advanced sporting equipment to the F-22 aircraft fuselage. However, current state-of-the-art composite materials can also exhibit properties that present serious barriers to entry in some high-performance markets. These include poor flame, smoke and toxicity (FST) performance, physical degradation at high temperatures as well as higher material and processing costs. When exposed to fire or high temperatures (>500°C), conventional composite materials can combust and generate toxic smoke and/or gases. The exceptions, such as ceramic matrix composites and metal matrix composites, are too expensive (often more than $500/lb) to gain a significant market presence. Clearly, a market need exists for affordable high temperature-resistant, insulating structures.

The most familiar composite systems today are based on organic polymer matrices such as epoxy/glass fiber, epoxy/carbon fiber, polyurethane/glass fiber, PVC/glass fiber, Polyimide/quartz fiber, polyester/glass fiber and nylon/glass fiber. Although organic polymer composites exhibit excellent physical and mechanical properties, they are limited with regard to flammability, smoke and gas generation and elevated service temperatures. The flammability of organic polymer-based composites can be reduced by the addition of inorganic components and/or additives. The substitution of hydrogen atoms with halogen atoms (e.g. chlorine) in hydrocarbons and hydrocarbon polymers can significantly reduce flammability and smoke/gas generation but will degrade at high temperatures (>250°C) and eventually incinerate at higher temperatures (>450°C). Organic thermoplastic polymers also deform at relatively low temperatures (100°C to 300°C) and organic polymers designed for higher service temperatures are generally prohibitive in material and processing costs.

Other composite materials include metal matrix composites (MMC), ceramic matrix composites (CMC), carbon-carbon composites as well as other inorganic matrix composites. A composite matrix may be 100% inorganic, or it may contain some organic content. Inorganic matrix networks include ceramics, silicates, glasses, aluminum silicates, alkali aluminum silicates, potassium silicates, sodium silicates, silicon carbides, silicon nitrides, alumina, cementitious materials, metals, metal alloys or other matrix materials known to those knowledgeable in the arts. Other materials can be considered include inorganic particles encapsulated with inorganic binders, organic resins filled with inorganic fillers, inorganic-organic hybrids such as silicone, and other inorganic matrix materials known to those knowledgeable in the arts.

A disadvantage of organic polymers is their deficiencies at high temperatures. The use of metals and ceramics raises additional questions with regard to thermal and electrical conductivity, weight limitations, toughness, dielectric properties, ductility, and processing options. Further, ceramics do not lend themselves to the low temperature processing procedures as contrasted with organic polymer processing.

A need exists for noncombustible, temperature-resistant inorganic polymer compounds processable at temperatures less than the typical processing temperatures and pressures for organics (<200°C and <200 psi or 1.378 MPa) which combines the desirable features of ceramics (non-flammability, resistance to temperatures >450°C) and organic polymers (low-temperature processing, complex shapes).

Alkali silicates are employed as affordable inorganic matrix binder materials. See for example, US Patent numbers 4,472,199; 4,509,985; 4,888,311; 5,288,321; 5,352,427; 5,539,140; or 5,798,307 to Davidovits; US Patent number 4,936,939 to Woolum; or US Patent number 4,284,664 to Rauch. However, alkali silicates typically possess a very high pH. Thus, these alkali solutions are so caustic that they damage glass fibers, severely degrading strength. Furthermore, cured composite samples prepared in accordance to these disclosures still exhibit a high pH in a solid form. Rauch has disclosed the addition of nonreactive borosilicate glass to an alkali silicate solution, but the glass mentioned is Pyrex, a material that is inert.

## Summary of the Invention

The present invention is the result of the discovery that an inorganic polymer network can be achieved using a composition that is the reaction product of an alkali silicate, a reactive acidic glass and water. The alkali silicate can be prepared either of two ways: (1) As the reaction product of an alkali hydroxide or oxide, a silica source and water or (2) using a commercial or pre-prepared alkali silicate such as Kasil-1, sodium silicate, potassium silicate flake, etc and combinations thereof. Furthermore, inorganic silicate/glass composites can be achieved using an aqueous slurry of a mixture of an alkali silicate (or its precursors), a reactive acidic glass and water, as well as gel inhibitors and other network forming materials and modifiers.

The thermally resistant inorganic matrix compositions of the present invention incorporate a silicate network and an amorphous phosphate glass network that can be processed within a wide range of temperatures and pressures. A useful feature of this invention is the ability to produce high-temperature resin and composite parts capable of withstanding temperatures of 1000˚C and are noncombustible. The matrix as well as the composites made from the matrix material exhibit properties generally restricted to ceramics but are cured at temperatures typical for organic polymer compositions. In addition, the cured matrix composition is not as basic as are most alkali silicate- systems but can be formulated to be near neutral with a typical pH below 8.

The addition of an acidic glass, particularly with favorable physical and mechanical properties can yield an unique cured material for high-temperature applications and components. The addition of a solid reactive glass powder to the silicate mixture permits a much higher loading of a non-silicate network and lessens the tendency of the mixture to gel prematurely. The combination of two or more networks within the matrix imparts toughness, a near neutral to neutral pH, enhanced temperature resistance (resin and composites >1000˚C) and hydrolytic stability.

Alkali silicate/glass-based composites can be prepared by applying an aqueous slurry of the modified alkali silicate/glass matrix precursor to a reinforcing medium such as a continuous or discontinuous glass or carbon fiber mat. After an optional B-staging period the composite is cured using the appropriate temperature and pressure to consolidate the material into a composite. The term "B-staging" is a common term used in composite technology to describe the practice of allowing a polymer matrix precursor to react and proceed to a partially polymerized intermediate stage short of a fully cured polymer network. Vacuum bagging can also be implemented to aid water removal and consolidation. Compression molding, as well as other typical molding methods, can be used to shape the composite as desired.

The resulting neat resin and/or composite exhibits thermal stability up to 1000˚C and higher, depending upon the formulation and processing plus possesses excellent properties with respect to flame, smoke and toxicity. Furthermore, a composite made using the inorganic polymer network forming composition of the present invention is lightweight with good thermal and electrical insulating characteristics. Various shapes are relatively inexpensive to manufacture primarily due to the low temperature and pressures needed to effect cure of the composite.

An alternate composition is a liquid mixture of the alkali base, a silica source, an acidic oxoanionic compound such as phosphoric acid and a multivalent cationic compound such as magnesium nitrate is dried to a friable mass and powdered. The resin powder is combined with the glass powder, formed into usable shape with or without reinforcement, and cured as desired to provide a temperature resistant formulation.

The composition is also useful as an adhesive composition, a coating, a neat resin or as a molding compound. The compositions of the present invention are useful in those applications where good thermal and physical stability are desired, such as those applications for which ceramic composites are used.

## Detailed Description of the Invention

The inorganic polymer network of the present invention is prepared by reacting an alkali silicate solution, a reactive acidic glass, water and optionally additives such as a clay and/or an oxide filler. Alternately, the reaction of a silica source, alkali base(s), water and a reactive acidic glass can also yield a high-temperature inorganic polymer network. The composites are made by applying a slurry of an aqueous alkali silicate (or its precursors), a reactive acidic glass (plus any desired additives) and water to a reinforcing medium which can be processed within a wide range of temperatures and pressures. The composite can be shaped by any of the numerous molding methods available prior to curing. The silicate/glass polymer composition can be cured at relatively low temperatures and pressures (i.e., <200˚C, and <200 psi or 1.378 MPa) to produce a composite having dimensional and thermal stability to 1000˚C and greater.

The alkali silicates utilized can include a wide range of silica/alkali oxide ($SiO_2/A_2O$) ratios and % solids levels. Such solutions can be purchased from commercial sources or prepared immediately prior to use from precursors such as a silica source and an alkali hydroxide, alkali oxide or carbonate or combination thereof. The alkali silicate can be derived from an alkali base, such as potassium hydroxide or sodium hydroxide, from potash or soda ash and a silica source. The $SiO_2$ source can be an amorphous or crystalline $SiO_2$ form, such as silica, silica fume, precipitated silica, microsilica, sand, microcrystalline silica, silica gels, colloidal silica, quartz, quartz flour, a sodium silicate solution, a potassium silicate solution as well as solid sodium and/or potassium silicates. Various silica sources exhibit desired as well as undesired attributes, for example, some silica fume sources contain traces of carbon that can lead to discoloration in the final product. The thermal and physical properties of the inorganic matrix binder can be influenced by the nature of the silica source, for example, the incorporation of a dense crystalline $\alpha$-quartz network can enhance dimensional stability while, in turn, introducing an open, amorphous silica source will produce a lower density network.

When the alkali silicate is derived from an alkali hydroxide and a silica source, the alkali hydroxide is present in an amount of 3 wt. % to 20 wt. % based upon the weight of the total composition or mixture, preferably 7 wt. % to 15 wt. %. The silica source is present in an amount of 10 wt. % to 75 wt. %, preferably 15 wt. % to 60 wt. %. The total mixture, in this instance, includes an alkali hydroxide, a silica source, a reactive acidic glass, water, a clay filler and oxide filler. In some cases, for example, when an alkali silicate solution is used, the portion of the alkali hydroxide, silica and water provided is included in the ranges disclosed.

The phrase "reactive acidic glass" encompasses a wide variety of acidic inorganic glasses that can contribute an acid group in the condensation reaction between the alkali silicate and the glass which occurs during the curing step. Examples of reactive acidic glasses include phosphate, borate and borophosphate glasses. Reactive acidic glasses are different from essentially nonreactive structural glasses as used in beakers and drinking vessels, and optical glasses as used in windows. Reactive acidic glasses are made according to typical glassmaking processes by combining oxide reactants. In the case of an alkali borophosphate glass $P_2O_5$, $B_2O_3$, and one or more alkali oxides or their precursors are combined in a powder form and heating the mixture to its fusion temperature of 700˚C to 900˚C and then rapidly cooling the melt and optionally annealing the glass to a rigid, friable state. The ratio of phosphoric oxide to alkali metal oxide ($A_2O$) will be 6.1:1.0 to 1.5:1.0. The glass solid is then pulverized to form a powder.

The reactive acidic glass is preferably in powdered form with reactive borophosphate glass powder being preferred. The thermal and physical properties of the inorganic silicate/glass matrix can be varied by adjusting the ratio of $SiO_2$ to the reactive acidic glass (**G**). The G:$SiO_2$ ratio can vary from 0.01 to 50.0 by weight. The reactive acidic glass is used in an amount of between 0.01% to 60% by weight of the total mixture, with 5% to 35% being preferred, and 10% to 30% by weight being further preferred.

The glass composition before fusion will comprise 20 mol % to 80 mol % of potassium oxide ($P_2O_5$), based upon the total glass formulation, preferably 30 mol % to 70 mol % with 40 mol % to 60 mol % by weight being further preferred. The boron oxide ($B_2O_3$) will comprise 1 mol % to 15 mol % of the glass, with 2 mol % to 8 mol % being preferred and 4 mol % to 6 mol % further preferred. The alkali oxide ($A_2O$) comprises 5 mol % to 50 mol % of the glass composition, with 20 mol % to 40 mol % being preferred, and 15 mol % to 30 mol % further preferred. The alkaline earth oxide (M'O) is used in an amount of between 0.01 mol % to 30 mol % of the total glass mixture, with 5 mol % to 20 mol % being preferred, and 10 mol % to 15 mol % being further preferred.

Although the invention is the inorganic matrix composition resulting from the reaction of the alkali silica source and the reactive acidic glass powder, the mechanical, physical and processing characteristics of the matrix can be enhanced by the addition of reactive and nonreactive fillers such as metal oxides and clays. These optional components if used in the matrix formulation range from 2 wt % to 20 wt %.

The balance of the composition (prior to curing) is water and it will comprise 15% to 60% by weight based upon the total composition weight. The range of 20% to 50% by weight is preferred, with 25% to 35% by weight further preferred. The water can be contributed as part of one of the components, such as a portion of an alkali silicate solution.

An approximate chemical composition of the invention, i.e., a qualitative representation of the starting materials, which is derived from an aqueous mixture before curing to form the inorganic matrix, can be described as follows:

$$(\mathbf{1}\text{-n})[a\mathbf{A_2O} : \mathbf{SiO_2} : g\mathbf{G} : f\mathbf{F_x}] \cdot n\mathbf{H_2O}$$

Where:

**A** = [(1-z) $K_2O$, (z) $Na_2O$], where z ranges from 0 to 1.
**$K_2O$** = potassium oxide
**$Na_2O$** = sodium oxide
**$SiO_2$** = silica, derived from a silica source such as Kasil-1, silica fume, silica, quartz or silica gel, or a combination thereof.
**G** = an acidic reactive glass such as an alkaliborophosphate glass.
**$F_1$** = (optional) additional network former(s), such as $P_2O_5$, $SO_3$, etc., derived from an acidic precursor, such as $H_3PO_4$, $H_2SO_4$, etc., or a combination thereof
**$F_2$** = (optional) secondary network linking unit(s) such as $Mg^{2+}$, $Zn^{2+}$, $Ti^{4+}$ derived from multivalent main group metal and/or transition metal compounds such as $Mg(NO_3)_2$, $Zn(NO_3)_2$, etc. or a combination thereof.
**$F_3$** = (optional) reactive and/or nonreactive fillers such as kaolin, mica, vermiculite, metakaolin, metal oxides, etc. or a combination thereof.
**$F_4$** = (optional) gelation modifier such as an organic base (quinoline) and/or an organic acid (lactic acid).

$H_2O$ = water

**a** = preferred molar ratio of $A_2O$ : $SiO_2$ and ranges from 0.05 to 1.00.

**g** = preferred molar ratio of G : $SiO_2$ and ranges is from 0.01 to 50.0.

**f** = (optional) preferred molar ratio of F : $SiO_2$ and ranges from 0.000 to 2.000.

**x** = 0 to ~20, number of additives (F) used to aid in processing and performance of the basic formulation.

**n** = molar ratio of $H_2O$ incorporated into the formulation. During initial formulation, our desired range is from 0.10 to 0.90 (where n = 0.20 to 0.40 is the preferred embodiment). After cure, n is less than 0.25 (where n < 0.05 is the preferred embodiment).

The formulation of the reactive acidic glass (**G**) is critical to the chemistry and the performance of this invention. It is desired that the glass react with the alkali silicate mixture to reduce the basicity of the resulting matrix and to conjoin multiple networks. The combination of very different networks, one silicate-based and the other phosphate-based results in a blend of an amorphous inorganic polymer and a crystalline network as well as new network units formed by reaction of the basic silicate and the acidic phosphate such as - Si - O - P -. Both silicate and phosphate species are known to be excellent network formers form the basis for this invention.

The glass (**G**) can be concisely described by the following formula:

$$\prod_{k=1}^{n} [(M^{p+})_{q'}(E^{q-})_{p'}]_{r_k} \text{ where } \Sigma r_k = 1$$

**n** = number of desired glass components

Where:

**M** = a main group glass former such as boron, silicon, phosphorus, sulfur, germanium, arsenic, antimony and metallic glass modifiers such as vanadium (also a glass former), titanium, chromium, manganese, iron, cobalt, nickel, copper, mercury, zinc, lead, aluminum, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, cadmium, lithium, sodium, potassium, rubidium, and cesium.

**E** = oxygen, chalcogenides and halogens such as sulfur (also a glass former), selenium, tellurium and fluorine.

**p** = cation valence of **M** such as 5 for phosphorus (generally portrayed as $P^{5+}$ or P(V)).

**q** = anion valence of **E** such as 2 for oxygen (generally portrayed as $O^{2-}$).

**q'** = number of **M** cations contained in a network unit equal to **q** or $q/_2$ whichever is the lesser whole number whenever **p** and **q** are even numbers, such as 2 for phosphorus in $P_2O_5$ or 1 for silicon in $SiO_2$.

**p'** = number of **E** anions contained in a network unit equal to **p** or $p/_2$ whichever is the lesser whole number whenever **p** and **q** are even numbers, such as 5 for phosphorus in $P_2O_5$ or 2 for silicon in $SiO_2$.

**r** = molar fraction of each individual network unit in the reactive acidic glass component.

**n** = number of total network units in the reactive acidic glass component.

Thus for a three-component reactive acidic glass component containing phosphorus, lithium and boron, the generalized formula is

$$[(P_2O_5)_{r_1}(Li_2O)_{r_2}(B_2O_3)_{r_3}]$$

Where: $r_1 + r_2 + r_3 = 1$ and $r_1 > r_2$

For a five-component reactive acidic glass component containing phosphorus, lithium, boron, magnesium and barium, the generalized formula is:

$$[(P_2O_5)_{r_1}(Li_2O)_{r_2}(B_2O_3)_{r_3}(MgO)_{r_4}(BaO)_{r_5}]$$

Where: $r_1 + r_2 + r_3 + r_4 + r_5 = 1$ and $r_1 > r_2$

$r_1$ ranges from 0.300 to 0.800, $r_2$ ranges from 0.050 to 0.500,

$r_3$ ranges from 0.010 to 0.150, $r_4$ ranges from 0.010 to 0.200, $r_5$ ranges from 0.010 to 0.200.

The chemical and physical properties of the phosphate glass are determined by the initial formulation, the composition of the individual glass components, refining, annealing and aging conditions. The properties of the glass necessary for this invention include an acidic formulation, durability, hydrolytic stability, reactivity and plasticity. The type and ratio of the glass components dictate these properties. For instance, a very reactive yet durable glass can be prepared using $NH_4H_2PO_4$, $Li_2CO_3$, $B(OH)_3$ and $MgCO_3$. The molar ratio of $[P_2O_5]:[Li_2O]$ must be greater than 1 to yield an acidic formulation. The addition of $B_2O_3$ (from $B(OH)_3$) enhances the durability of the phosphate glass while the selection of $Li_2O$ (from $Li_2CO_3$) and $MgO$ (from $MgCO_3$) reduce water sensitivity. In part, the variation of the molar ratios of all three components govern acidity, durability, hydrolytic stability, the glass softening temperature ($T_s$), the glass melting temperature ($T_m$) and the glass transition temperature ($T_g$) of the glass. The refining time and temperature of the glass also influences its physical and mechanical characteristics. For a constant composition increasing the refining temperature and/or time further densifies the glass network raising the $T_g$, $T_s$ and $T_m$, reducing network activity and the hydroxyl/$H_2O$ content of the glass while enhancing durability. Thus by varying the glass composition, the glass refining time and temperature, various glass formulations can differ greatly with regard to reactivity, durability, acidity, hydrolytic stability, toughness and processing. The matching, blending and adjustment of the glass and the alkali silicate properties allows the formulation of a high-temperature material with unique and novel properties. In other words, the ability to vary these "building blocks" enables one to tailor product properties to suit numerous high-temperature applications.

The matrix composite material system of the present invention addresses the pH issue by adding an acidic inorganic component (i.e., a reactive acidic glass powder) to an alkali silicate solution. The alkali silicate solutions rely on their high pH to advance the reaction and neutralizing the pH can negatively affect the curing process. The addition of a reactive acidic glass to the alkali silicate component reduces the pH level as the composite is cured, ultimately yielding a near neutral (pH 6-8) cured matrix. This reduces the damage to the glass reinforcement. The cured binder of the present invention contains multiple interacting inorganic networks, some being amorphous and others being crystalline, based upon the cure conditions. The combination of multiple networks provides enhanced thermal resistance, controlled chemical reactivity and resistance and reduced water content.

Additional components such as fillers, other network forming materials and modifiers can be incorporated as needed. These include additives and fillers typically used or known to ones skilled in the art. A polymer compound whether inorganic, organic or hybrid can include many additives or fillers to permit processing, fabrication and enhanced performance in service. Traditional fillers include kaolin, metakaolin, montmorillonites and other clay or mineral fillers. Modifiers can include crosslinkers and gel inhibitors/promoters such as mineral acids, organic acids and bases. The modified alkali silicate composition that is obtained can be cured at relatively low temperatures (<200°C), and at low pressures (<200 psi or 1.378 MPa) to produce a inorganic polymer network having dimensional stability to 1000°C and higher. However, it is not restricted to the lower temperature or pressure, and if needed, or desired, properties can be further enhanced utilizing elevated processing temperatures (up to 1000°C and above) and pressures (up to 20,000 psi or 137.895 MPa), or performing post-cure heat treatments.

The optional network former ($F_1$) compound can be a compound such as borate, sulfate, aluminate, vanadate, boric acid, phosphoric acid, sulfuric acid, nitric acid, sodium dihydrogen phosphate, disodium hydrogen phosphate, potassium hydrogen phosphate, ammonium hydrogen phosphate, germanate, or the like. The optional network former is present in an amount of between 0.0 wt. % and 20 wt. % based upon the total composition. If included in the formulation, the preferred amount of the **$F_1$** network former would be between 2 wt. % to 5 wt. %.

The optional secondary network linking unit(s) ($F_2$) are selected from Groups 2, 3, 4, 5, 11, 12, 13, 14, 15 and 16 of the Periodic Table can be used in an amount of between 0.0 wt.% and 10 wt.% based upon the total mixture and if included in the formulation, the range of 1 wt. % to 3 wt. % would be further preferred. The optional secondary network-linking unit can be a multivalent cation useful for coordinating with oxo species such as the alkaline earths, main group metals, transition metal species, lanthanides and/or actinides and any useful combination thereof. Compounds such as $Zn(NO_3)_2$ can be incorporated to modify network density. Other network linkers can include multivalent cations derived from boron, aluminum, lead, zinc, gallium, cadmium, titanium, zirconium, lanthanum, cerium, neodymium, yttrium, magnesium, calcium, strontium and barium.

The optional clay filler ($F_3$) is preferably calcined kaolin and can be used in an amount from zero to 10 wt. % based upon the weight of the total composition and if included in the formulation, 3 wt. % to 5 wt. % would be further preferred. The calcined kaolin may prove to be reactive with the silicate matrix material, although reactivity of the clay filler is not required and any of the commercially available clay fillers can be employed.

The optional oxide filler (**$F_3$**) is preferably magnesium oxide (MgO) and can be used in an amount of zero % to 10% by weight based upon the total weight of the composition and if included in the formulation 1 % to 6% by weight is preferred and 2% to 4% by weight further preferred.

The optional gel modifier (**$F_4$**) is an organic acid or base generally selected from the group consisting of hydroxyacids and N-based and P-based bases. Preferably α-hydroxyacids, β-hydroxyacids, substituted pyridines and quinolines are used. These are utilized in an amount from none to 10 wt. % based upon the weight of the total composition, with .05 wt. % to 5 wt. % being further preferred if used in the formulation.

The balance of the uncured composition is water and it will comprise 10 wt. % to 75 wt. % based upon the total composition weight. The range of 15 wt. % to 40 wt. % is further preferred. The water can be introduced as part of one of the components, such as part of an alkali silicate solution, an alkaline earth salt solution or part of a phosphoric acid solution. Since the water incorporated in this invention can be viewed as a reaction medium, a reactant as well as a reaction product, the concentration of water can be difficult to quantify in general. The initial level of water in the starting mixture can vary from 10 wt. % to 70 wt. % while a B-staged prepreg may contain 5 wt. % to 35 wt. % water. A cured sample of the inorganic binder and/or composite can contain 0 wt. % to 10 wt. % water depending upon the processing conditions.

The reinforcing medium can be a material composed of reinforcing fibers, such as continuous or discontinuous fibers, which will be encapsulated in the matrix material. Reinforcing fibers may include glass fibers, carbon fibers, graphite fibers, metallic fibers, quartz fibers, ceramic fibers, basalt fibers, silicon carbide fibers, stainless steel fibers, titanium fibers, nickel alloy fibers, polymeric fibers, aramid fibers, alkaline resistant glass fibers and/or other fibers known to those knowledgeable in the arts. Reinforcing fibers may be in many forms, including yarns, tows, whiskers, continuous fibers, short fibers, woven fabrics, knitted fabrics, non-woven fabrics, random mats, felts, braided fabrics, wound tows, and/or other forms known to those knowledgeable in the arts.

The matrix compositions may incorporate a wide variety of organic and inorganic fillers commonly used by those knowledgeable in the art. The matrix may incorporate filler materials such as ceramic powders, mineral powders, silicon carbides, silicon nitrides, carbon, carbon black, molybdenum and its compounds, silicates, aluminum silicates, sodium aluminum silicates, potassium aluminum silicates or other inorganic fillers known to those knowledgeable in the arts. Organic materials are less preferred where the application is such that the organic materials will combust and produce gases. The filler materials also could be spheres or particles, such as microspheres, macrospheres, hollow spheres, and solid spheres.

The inorganic matrix of the present invention influences the pH of the solution containing the alkali silicate backbone by incorporating an acidic inorganic component such as a reactive acidic network (e.g. an alkali borophosphate glass). The inorganic matrix binder cures via a condensation reaction partially driven by the elimination of water from the framework and if not removed excessive residual water in the binder leads to poor dimensional stability, poor physical properties and difficulty in processing.

The composite material can be shaped using any of the composite molding methods typically employed. The test specimen for this example was formed into a multi-layer composite by a traditional prepreg/lay-up method. A "prepreg" is formed by impregnating a reinforcing medium or reinforcement with the matrix binder to produce a binder coated fabric sheet. The next step is to layer the individual prepreg plies together to achieve the desired thickness and/or shape. Next, the "lay-up" is placed into a mold to compress and/or consolidate the prepreg and to form the composite shape. Optionally, the prepreg can be subjected to a B-staging period and/or vacuum bagging to reduce the water content. Finally, the composite is cured using the temperature and pressure necessary to consolidate the product.

The uncured composite may come in many forms, such as bulk molding compound, sheet molding compound, powder and reinforcement, liquid and reinforcement and prepreg.

As can be appreciated, the composites of the present invention may be processed by any method capable of applying temperature and/or pressure. Typical processes include compression molding, pultrusion (an automated process capable of producing a constant cross-section product), wet layup (a simple manual process for rapid prototypes and affordable low performance products), filament winding (an automated process for bodies of revolution), autoclave vacuum bag processing (a typical process for high performance aerospace laminates), non-autoclave vacuum bag processing, vacuum infusion (a process for large thick high-performance parts), liquid resin, film infusion or powder infusion, resin transfer molding (a near net-shape molding process with excellent dimensional repeatability), extrusion (a process capable of producing constant cross-section non-structural short-fiber products), injection molding (an automated process capable of producing small non-structural short-fiber products), casting (a process for bulk non-structural products), spin casting (a process capable of producing high-quality tubing), trapped elastomer molding (a process capable of producing unusual shapes) and like processes.

These processes have several advantages compared to the curing/consolidation methods normally used in making high temperature inorganic polymers, namely ceramics and glasses. Ceramic and glass processing typically requires high temperature processing equipment (above 1000°C). The nature of the inorganic matrix formulation of the present invention allows composites to be processed with conventional equipment found in thousands of composites manufacturing facilities. These processes allow a more rapid throughput than typical ceramic processes and enables the easy manufacturing of larger parts than typical ceramic processes. The use of these processes allows high fiber volumes for structural integrity, which is superior to typical concrete processing.

Glass fiber reinforcement (including E-glass fibers, S-glass fibers, alkali resistant glass fibers, etc.) is the preferred reinforcing material and it allows several unique performance features. The composite materials using glass fiber reinforcement and the matrix binder of the present invention are affordable, non-combustible, thermally-stable (i.e., no substantial or <1.0% permanent dimensional change after-48 hours of exposure at 700°C) composite materials with insulating qualities and structural qualities that can be processed at lower temperatures using typical processing equipment. Normal processing can be at relatively low temperatures (<200°C) and low pressure (<200 psi or 1.378 MPa). A cross-ply glass fiber laminate can be produced with thermal insulating qualities (e.g., thermal conductivity of nominally 1.4 W/m-K), electrical insulating qualities (no detectable electrical conductivity when measured with a standard ohm meter) and modest mechanical performance (flexural modulus up to 8 Msi, flexural strength up to 20 ksi, and ultimate flexural strains up to 1.3%). This combination of properties should be enabling technology for many applications.

Ceramic fiber reinforcement (including silicon carbide fibers) is another preferred reinforcement, especially for high temperature applications above 700˚C. Although expensive, ceramic fibers maintain structural integrity well above 1000˚C. Carbon fiber reinforcement is a preferred reinforcement where electrical conductivity, thermal conductivity, high strength and/or impact resistance is desired.

The following material properties and standardized tests are used to evaluate the performance of composites prepared with the inorganic matrix binders of the present invention: hydrolytic stability; flexural strength (ASTM D790-99), flexural modulus (ASTM D790-99), ultimate flexural strain (ASTM D790-99), specific gravity (ASTM D792), thermal dimensional stability, thermal conductivity (modified ASTM C177), electrical conductivity; pH (of the resin solution, the neat resin and the composite structure) Differential Scanning Calorimetry (or DSC); combustibility, thermal conductivity (ASTM C177), electrical conductivity (ASTM D 257), voltage breakdown (ASTM D229), permittivity @ 1 MHz (ASTM D229), dissipation factor @ 1 MHz (ASTM D229), arc resistance (ASTM D229), Izod impact strength (lengthwise & crosswise) (ASTM D229), flammability (UL 94, ASTM E-1354), dielectric constant; temperature index (NEMA LI-6), tensile strength, modulus and ultimate strain (ASTM D 638), compression strength, modulus and ultimate strain (ASTM D 695), interlaminar shear strength (ASTM D3846), short beam shear strength (ASTM D2344) and compression after impact.

The formulations disclosed within the terms of the present invention may also comprise any additives and fillers commonly in usage with regular hydraulic binders.

Furthermore, the use of the matrix binder is not solely limited to composites but can be used to form neat resin components, coatings and adhesives.

As can be appreciated, the present invention can be formulated to be non-combustible. This desirable safety feature differentiates the invention from most organic materials (such as plastics, wood, rubber, etc.), which tend to combust, generate smoke and/or toxic gases upon exposure to fire. Further, the present invention can be formulated to be a thermal insulator and/or an electrical insulator. This desirable feature differentiates compositions in accordance with the present invention from most metals (such as steel, aluminum, copper, etc.), which tend to be thermal conductors and electrical conductors.

The present invention can be formulated to perform at high temperatures (>1000˚C) with negligible permanent changes in dimensions. This desirable feature differentiates the invention from most organic materials (which tend to pyrolyze when exposed to temperatures above 500˚C), from most cements (which tend to spall above 300˚C) and from many metals (including aluminum), which tend to warp or melt at 700˚C. As a further feature, the present invention can achieve high temperature performance (above 700˚C) while being processed at relatively low temperatures and low pressures (e.g. <200˚C and <200 psi or 1.378 MPa). This feature is desirable because the ability to process at low temperatures and pressures allows the invention to be processed with more affordable equipment and manufacturing processes. This feature of the chemistry differentiates the present invention from most ceramics, glasses and metals, which generally require very high temperatures and/or high pressures to create a molded shape. (Of course, the invention also can be effectively processed at higher temperatures and pressures; we have processed the material above 10,000 psi (68.948 MPa) and above 1500˚C).

The present invention can be formulated to impregnate fibers to form a rigid composite material. This desirable feature differentiates the invention from most materials, because most rigid materials have not been processed as a low viscosity liquid capable of wetting fibers. Fiber reinforcements within a matrix material offer many benefits, including improved strength, stiffness, fracture toughness, fatigue strength and impact resistance. While fiber-reinforced composite materials are common in applications ranging from high-performance automotive fascia to F-22 aircraft structures, the vast majority of composite materials are made with organic matrix materials, which are combustible. Non-combustible composite materials, such as ceramic matrix composite materials and metal matrix composite materials, tend to be cost prohibitive (often more than $500 per pound) for most applications. The present invention can be processed at a much lower cost than most ceramic or metal matrix composite materials.

The present invention readily can be formulated to incorporate a wide variety of fillers to tailor the material performance to suit the specific application. These fillers, which may include hollow spheres, conductive fillers, friction additives or thermal

additives, can be incorporated to modify physical properties including density, conductivity, coefficient of friction, thermal performance, etc. These desirable features differentiate the present invention from many materials, including many metals. Given these features, the present invention is suited for many applications, including fire barriers, heat shields, high-temperature insulators, high-temperature molds, friction products, tooling and structures in high temperature environments.

The following examples are illustrative of the present invention, and should not limit the scope of the invention.

Glass Preparation:

The following example will serve to illustrate the preparation of a reactive acidic glass for use in accordance with the present invention. The borophosphate glass is prepared as follows (reactants shown in Table 1):

1) The ammonium monobasic phosphate, boric acid, magnesium oxide and lithium carbonate or their equivalents are combined, blended and ground as dry powders. If needed, a phosphate/boric acid or other masterbatch can be prepared and used to enhance consistency.

2) The blended mixture is transferred to an alumina crucible and placed in a muffle furnace. The mixture is dried at 150˚C for 1-3 hours and then further heated at 225-275˚C for 2-10 hours to initiate a low-temperature condensation reaction and minimize foaming at higher temperatures. After the mixture has partially condensed, the furnace temperature is raised to 700-900˚C for 0.5 to 5.0 hours. At completion of the refining step, the molten glass is poured onto a quench plate and allowed to cool. The glass is then broken into small pieces and ground to the desired particle size, noting that a very small particle size enhances the reactivity of the glass.

3) The glass can be post-treated thermally to limit irregularities in composition, morphology and reactivity.

Table 1: The initial formulations of the phosphate glasses described in Examples 1-5.

| Ingredient | Example 1 | Example 2 | Example 3 | Example 4 | Example 5 |
|---|---|---|---|---|---|
| $NH_4H_2PO_4$ | 90.40 | 132.86 | 148.94 | 126.53 | 88.83 |
| $B(OH)_3$ | 3.21 | 6.44 | 6.36 | 6.43 | 3.16 |
| $MgCO_3$ | 1.58 | 8.85 | 8.73 | 8.83 | 3.25 |
| $BaCO_3$ | - | 20.72 | 5.11 | 20.67 | - |
| $Li_2(CO_3)_2$ | 4.84 | 15.52 | 15.31 | 17.42 | 4.17 |
| | (g) | (g) | (g) | (g) | (g) |
| Refining Conditions T(˚C) / t(min) | 250˚C / 4 hrs. 750˚C / 5 hrs. | 500˚C / 4 hrs. 900˚C / 4 hrs. | 500˚C / 2 hrs. 900˚C / 4 hrs. | 500˚C / 4 hrs. 900˚C / 4 hrs. | 110˚C / 3 hrs. 230˚C / 18 hrs. 715˚C / 1 hrs. |

The examples illustrate the preparation of the reactive acidic glasses which will be used in examples 6 - 11, which follow. The glass is prepared by blending the ingredients shown in Table 1. The blended mixture is put into alumina crucibles and placed in a muffle furnace at the conditions given in the table. The molten glass in poured onto a quench plate and allowed to cool. The glass is then ground to the desired particle size.

Example 6

A portion of Kasil-1 (9.0 g) is transferred to a 50mL beaker and slightly diluted by adding a small amount of water (1.0 g). The beaker is stirred and allowed to cool to ambient temperature. Next the phosphate glass prepared according to Example 1 is added slowly to the stirred potassium silicate solution. After this addition is completed, calcined kaolin, metakaolin or kaolin powder (1.0 g) is added with high-shear mixing. The mixture is allowed to set until the viscosity comes to a level (approximately 150 centipoise) suitable for application to the reinforcement medium (fabric, chopped fiber, wound filament, etc.) needed to construct the composite. If a neat sample is required, the amount of water used can be reduced. The composite material can be prepared using any of the composite molding methods typically employed, the test specimen for this example was formed into a composite by a traditional prepreg/lay-up method. A "prepreg" is formed by impregnating a reinforcing medium or reinforcement with the matrix binder to produce a binder coated fabric sheet. The next step is to layer the individual prepregs together to achieve the desired thickness and/or shape. Next, the "lay-up" is placed into a mold to compact or consolidate the prepregs and to form the composite shape. Optionally, the prepregs could be subjected to a B-staging period and/or vacuum bagging to reduce the water content.

Fiberglass composite panels were made using this formulation and compression molded using standard composite processing parameters: curing at 200 psi (or 1.378 MPa) and 80˚C for 3 hours, 110˚C for 3 hours and 150˚C for 3 hours.

Example 7:

Potassium hydroxide (52.2 gms) is dissolved in water (148.2 gms) by stirring. This dissolution is exothermic requiring cooling (refrigerating to approximately 5˚C) before adding the remaining ingredients. The silica fume (301.2 gms) is then added to the chilled solution slowly using high shear, continually monitoring the temperature. This mixture is allowed to stir for approximately 5 minutes before adding lactic acid (9 gms) after which it is allowed to stir for an additional 5 minutes. The glass (75 gms), made in example 2, is suspended in water (20.1 gms) and slowly added using high shear to the mixture. Finally, kaolin (28.2 gms) then magnesium oxide (28.2 gms) are added using high shear mixing. The mixture is stirred for an additional 10 minutes resulting in a material with a viscosity of approximately 20,000 cp. Prepreg is made from combining this material with a reinforcing fabric. Impregnation and curing process is described in Example 12.

Example 8:

Potassium hydroxide (43.5 gms) is dissolved in water (123.5 gms) by stirring. This dissolution is exothermic requiring cooling (refrigerating to approximately 5˚C) before adding the remaining ingredients. Tamsil 8 (200.8 gms) and silica gel (50.2gms) are then added to the chilled solution slowly using high shear, continually monitoring the temperature. The glass (125 gms) made in example 3 is suspended in water (33.5 gms) and added slowly to the mixture using high shear mixing. Finally, kaolin (23.5 gms) then magnesium oxide (23.5 gms) are added using high shear mixing. The mixture is stirred for an additional 10 minutes resulting in a material with a viscosity of approximately 100,000 cp. Prepreg is made from combining this material with a reinforcing fabric. Impregnation and curing process is described in Example 13.

Example 9:

Silica fume (5.2 gms) is added to Kasil 1 (130.0 gms) and stirred for 10 minutes. The glass (80.0 gms) made in example 4 is suspended in water (30.0 gms) and added to the mixture slowly using a high shear mixer. Kaolin (7.5 gms) and magnesium oxide (7.5 gms) are then slowly added separately using high shear mixing. The mixture is then stirred for an additional 10 minutes resulting in a low viscosity (approximately 150 cp) mixture. Prepreg is made from combining this material with a reinforcing fabric. Impregnation and curing process is described in Example 14.

Example 10:

Potassium hydroxide (10.0 gms) is dissolved in water (70.0 gms) by stirring. The silica fume (30.0 gms) is then added to the solution slowly with high shear mixing. The glass (80.0 gms) made in example 5 is suspended in water (30.0 gms) and added slowly to the mixture with vigorous stirring. Finally, kaolin (7.5 gms) then magnesium oxide (7.5) are added using high shear mixing. The mixture is stirred for an additional 30 minutes resulting in a material with a viscosity of approximately 100 cp. Prepreg is made from combining this material with a reinforcing fabric. Impregnation and curing process is described in Example 15.

Example 11:

Potassium hydroxide (10.0 gms) is dissolved in water (100.0 gms) with stirring and allowed to cool. The silica fume (30.0 gms) is then added to the solution slowly with high shear stirring. After mixing for approximately 20 minutes the mixture is poured into flat dish, creating a liquid layer approximately 0.25" thick, and allowed to dry for 3 days. The dry material is then milled to fine powder. A second powder is made by blending the glass powder (80.0 gms) made in Example 5 with kaolin (7.5 gms) and magnesium oxide (7.5 gms). The two powders are then blended together to be used in molding and/or prepreg techniques. Impregnation and curing process is described in Example 16.

Example 12:

The resin formulation made in Example 7 is poured into a lab prepreg apparatus consisting of a resin bath and squeeze roll. The glass fabric, S2-Glass 6781, is fed through the bath and squeeze rolls impregnating the fabric with the resin formulation. The prepreg is then allowed to stage at room temperature for 30 minutes at which time the resin will not transfer when touched. The staged prepreg is cut into plies and layered on a metal plate. The lay-up is then vacuum bagged and a vacuum of 28 inches is pulled on the part for 2 hours. After 2 hours at room temperature the part is put into the press at 80˚C and 200 psi (or 1.378 MPa) for 3 hrs completing the cure cycle (refer to Table 2 for flexural properties).

Example 13:

The resin formulation made in Example 8 is impregnated into the glass fabric, S2-Glass 6781, manually using a plastic spool. The prepreg is staged at room temperature for 30 minutes at which time the resin is slightly sticky. The staged prepreg is cut into plies and layered on a metal plate. The lay-up is then vacuum bagged and a vacuum of 28 inches (0.98138 Kgf/cm$^2$) is pulled on the part for 2 hours. After 2 hours at room temperature the part is put into the press at 80˚C and 200 psi (or 1.378 MPa) for 4 hrs., 110˚C and 200 psi (or 1.378 MPa) for 2 hrs. and 150˚C and 200 psi (or 1.378 MPa) for 2 hrs. (refer to Table 2 for flexural properties).

Example 14:

The resin formulation made in Example 9 is poured into a lab prepreg apparatus consisting of a resin bath and squeeze rolls. The glass fabric, E-Glass 7781, is fed through the bath and squeeze rolls impregnating the fabric with the resin formulation. The prepreg is then allowed to stage at room temperature overnight at which time the resin becomes dry to the touch. The staged prepreg is cut into plies and inserted into a mold. The mold is then put into the press and cure at 85˚C and 200 psi (or 1.378 MPa) for 2 hrs., 110˚C and 200 psi (or 1.378 MPa) for 1 hr., and 175˚C and 200 psi (or 1.378 MPa) for 2 hrs. (refer to Table 2 for flexural properties).

Example 15:

The resin formulation made in Example 10 is poured into a lab prepreg apparatus consisting of a resin bath and squeeze rolls. The glass fabric, E-Glass 7781, is fed through the bath and squeeze rolls impregnating the fabric with the resin formulation. The prepreg is then allowed to stage at room temperature overnight at which time the resin becomes dry to the touch. The staged prepreg is cut into plies and inserted into a mold. The mold is then put into the press and cured at 120˚C and 200 psi (1.378 MPa) for 1 hr. and 175 ˚C and 200 psi (1.378 MPa) for 4 hrs. (refer to Table 2 for flexural properties).

Example 16:

The powdered material made in Example 11 is spread into a thin layer over a single ply of glass, the weight of the glass ply and powder are approximately equal. This same process is repeated for multiple plies then stacked into a laminate consisting of glass ply / powder / glass ply / powder. The laminate is inserted into a mold and press cured at 120˚C and 200 psi (1.378 MPa) for 1 hr. and 175˚C and 200 psi (1.378 MPa) for 4 hrs. (refer to Table 2 for flexural properties).

**Table 2: Flexural Properties of samples tested in Examples 12 -16.**

| Example | Flexural Strength (Ksi) | Flexural Modulus (Msi) | Ultimate Strain |
|---|---|---|---|
| 12 | 14.75 (101.698 MPa) | 3.347 (23,076.8 MPa) | 0.00564 |
| 13 | 11.40 (78.600 MPa) | 4.295 (29,613.0 MPa) | 0.00329 |
| 14 | 11.52 (79.428 MPa) | 2.221 (15,313.3 MPa) | 0.00280 |
| 15 | 10.42 (71.843 MPa) | 3.300 (22,752.7 MPa) | - |
| 16 | 10.97 (75.635 MPa) | 2.745 (18,926.1 MPa) | - |

Composites made in accordance with the present invention may be used in a wide variety of applications such as reinforced missile silo doors, ship decks, blast shields for aircraft carrier decks, hot gas filters, protective coatings, electrical panels and boxes (with and without EMI shielding), engine covers and heat shields where it would provide, advantageously, corrosion resistance, lifecycle cost savings and weight reduction. Another example would be reinforced insulator inserts for aircraft brakes. The insulator within each piston thermally isolates the friction head from the hydraulic system. Compared to conventional resins, which decompose below 450˚C, the matrix binders of the present invention have much higher thermal stability (to above 800˚C), and in contrast to metals, the composite of the present invention has superior insulation performance. This protects the hydraulic system and can reduce the weight and/or associated costs. In comparison to ceramics, the composite of the present invention is tougher because due to the presence of the reinforcing fibers, but less expensive than ceramic matrix composites due to the materials and processes utilized.

The foregoing embodiments of the present invention have been presented for the purposes of illustration and description. These descriptions and embodiments are not intended to be exhaustive or to limit the invention to the precise form disclosed, and obviously many modifications and variations are possible in light of the above disclosure. The embodiments were chosen and described in order to best explain the principle of the invention and its practical applications to thereby enable others skilled in the art to best utilize the invention in its various embodiments and with various modifications as are suited to the particular use contemplated. It is intended that the invention be defined by the following claims.

1. An inorganic matrix composition comprising the reaction product of an alkali silicate and/or alkali silicate precursors, a reactive acidic glass, water, and optionally a clay and/or oxide filler.

2. The composition of item 1, wherein the alkali silicate is selected from potassium silicate solutions and/or sodium silicate solutions.

3. The composition of item 1, wherein the alkali silicate is crystalline and/or amorphous sodium silicate and/or potassium silicate.

4. The composition of item 1 wherein the alkali silicate precursors are alkali hydroxides and a $SiO_2$ source.

5. The composition of item 4 wherein the $SiO_2$ source is an amorphous or crystalline $SiO_2$ form, selected from the group consisting of silica, silica fume, microsilica, precipitated silica, sand, quartz, quartz flour, silica gels, fumed silica and colloidal silica.

6. The composition of item 4 wherein the alkali hydroxide is selected from the group consisting of potassium hydroxide and sodium hydroxide.

7. The composition of item 1 wherein the alkali silicate and/or alkali silicate precursors has a $SiO_2/A_2O$ ratio of 2.0:1.0 to 20.0:1.0, where A is K (potassium) and/or Na (sodium).

8. The composition of item 1, wherein said acidic reactive glass is selected from the group of consisting of phosphate glasses, borate glasses and sulfate glasses.

9. The composition of item 1, wherein the acidic reactive glass is selected from the group of consisting of phosphate glasses such as ultraphosphate glasses, borophosphate glasses, alkaliborophosphate glasses, silicophosphate glasses, aluminophosphate glasses and mixtures thereof.

10. The composition of item 1, wherein the acidic reactive glass is selected from the group of consisting of phosphate glasses such as ultraphosphate glasses, borophosphate glasses, silicophosphate glasses, aluminophosphate glasses and mixtures thereof.

11. The composition of item 1, wherein the acidic reactive glass is an alkali borophosphate glass.

12. The composition of item 1, wherein the acidic reactive glass is an acidic alkali borophosphate glass.

13. The composition of item 1, wherein the glass comprises the following formula:

$$[(M^{p+})_{q'}(E^{q-})_{p'}]_r$$

where **M** is a main group glass former and/or a metallic glass modifier, **E** is an oxygen, chalcogenide and/or a halogen atom, **p** is the cation valence of **M, q** is the anion valence of **E, q'** is number of **M** cations contained in a network unit, **p'** is number of **E** anions contained in a network unit and **r** is the molar fraction of that network unit.

14. The composition of item 13 wherein **M** is a main group glass former selected from the group consisting of boron, silicon, phosphorus, sulfur, germanium, arsenic, antimony and metallic glass modifiers such as vanadium (also a glass former), titanium, chromium, manganese, iron, cobalt, nickel, copper, mercury, zinc, tin, lead, aluminum, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, cadmium, lithium, sodium, potassium, rubidium, and cesium.

15. The composition of item 13 wherein **E** is an oxygen, chalcogenide and/or a halogen atom such as sulfur (also a glass former), selenium, tellurium and fluorine.

16. The composition of item 13 wherein the preferred **M** is a main group glass former selected from the group consisting of boron, silicon, phosphorus, sulfur and metallic glass modifiers such as vanadium, titanium, zinc, lead, aluminum, zirconium, lanthanum, cerium, neodymium, magnesium, calcium, strontium, barium, lithium, sodium, and potassium atoms and E is an oxygen atom.

17. The composition of item 1 wherein the most glass composition comprises the following formula:

$$[(P_2O_5)_{r1}(Li_2O)_{r2}(B_2O_3)_{r3}(A'O)_{r4}(A''O)_{r5}],$$

wherein A' and A'' are additional metallic glass modifiers, $r_1$ is between 0.200 and 0.800, $r_2$ is between 0.050 and 0.500, $r_3$ is between 0.010 and 0.150, $r_4$ is between 0.010 and 0.200, $r_5$ is between 0.010 and 0.300, $r_1 + r_2 + r_3 + r_4 + r_5 = 1$, and $r_1 > r_2$.

18. The composition of item 17 wherein A' and A'' are selected from the group consisting of magnesium, barium, zinc and aluminum.

19. The composition of item 1, wherein the filler comprises an oxide(s) selected from the group consisting of oxides of boron, aluminum, silicon, zinc, gallium, titanium, zirconium, manganese, iron, molybdenum, tungsten, bismuth, lead, lanthanum, cerium, neodymium, yttrium, calcium, magnesium and barium.

20. The composition of item 1 wherein the clay filler comprises kaolin, calcined kaolin, mica, vermiculite and/or metakaolin.

21. The composition of item 1, wherein said alkali silicate and/or alkali silicate precursors are present in an amount between 30 wt. % and 90 wt. % based upon the total composition.

22. The composition of item 1, wherein said alkali silicate is formed from a alkali hydroxide and a $SiO_2$ source and said alkali hydroxide is present in an amount of between 3 wt. % to 40 wt. % and said $SiO_2$ source is present in an amount of 15 wt. % to 75 wt. % based upon the total composition weight.

23. The composition of item 1, wherein said reactive acidic glass is present in an amount of between 0.01 wt. % and 60 wt. % based upon the total composition.

24. The composition of item 1, wherein said reactive acidic glass is present in an G:$SiO_2$ ratio of between 0.01 and 50.0.

25. The composition of item 1, wherein said clay filler is present in an amount of between 0.0 wt. % and 20 wt. % based upon the total composition weight.

26. The composition of item 1, wherein said oxide filler is present in an amount of between 0.0 wt. % and 20 wt. % based upon the total composition weight.

27. The composition of item 1 comprises the reaction product of the following:

    a) 30 to 85 wt. % of alkali silicate;
    b) 0.01 to 60 wt. % of a reactive acidic glass;
    c) 0 to 20 wt. % of a clay filler
    d) 0 to 20 wt. % of an oxide; and
    e) 15 to 60 wt. % of water.

28. The composition of item 1 comprises the reaction product of the following:

    a) 15 to 75 wt. % of a $SiO_2$ source;
    b) 3 to 40 wt. % of an alkali hydroxide;
    c) 0.01 to 60 wt. % of a reactive acidic glass;
    d) 0 to 20 wt. % of a clay filler;
    e) 0 to 20 wt. % of an oxide; and
    f) 15 to 75 wt. % of water.

29. A composition-comprising the reaction product of water and the following mixture:

  a) 20 to 99.9 wt. % of alkali silicate;
  b) 0.01 to 80 wt. % of a reactive acidic glass;
  c) 0 to 20 wt. % of a clay filler; and
  d) 0 to 20 wt. % of an oxide.

30. A composition comprising the reaction product of water and the following mixture:

  a) 20 to 75 wt. % of $SiO_2$ source;
  b) 5 to 40 wt. % of alkali hydroxide;
  c) 0.01 to 75 wt. % of a reactive acidic glass;
  d) 0 to 20 wt. % of a clay filler; and
  e) 0 to 20 wt. % of an oxide.

31. The composition of item 1 further includes non-clay filler materials.

32. The composition of item 31, wherein the filler materials are selected from the group consisting of fibers, spheres, and particles.

33. The composition of item 31, wherein the fibers are selected from a group consisting of continuous fibers and discontinuous fibers.

34. The composition of item31, wherein the spheres are selected from the group consisting of microspheres, macrospheres, hollow spheres, and solid spheres comprising glass, ceramic, metal, mineral, organic or inorganic materials.

35. The composition of item 31, wherein the filler materials are utilized for reinforcement and selected from the group consisting of carbon fibers, glass fibers, alkali resistant glass fibers, mineral fibers, organic fibers, ceramic fibers and metallic fibers.

36. The composition of item 35, wherein the reinforcement materials are selected from the group consisting of graphite fibers, E-glass fibers, S-glass fibers, basalt fibers, stainless steel fibers, titanium fibers, nickel alloy fibers, aramid fibers, polyethylene fibers, SiC fibers and BN fibers.

37. The inorganic matrix composition made from the composition of item 1 and formed by curing the composition at a temperature ranging from 15°C to 1000°C (and higher) and a pressure range from vacuum (at ambient to $10^{-3}$ torr), and/or external pressure from ambient to . 20,000 psi (137.895 MPa).

38. The inorganic matrix composition of item 37 formed by curing the composition at 15°C to 200°C and an external pressure from ambient to 200 psi (1.378 MPa) and, alternatively, under vacuum (at ambient to $10^{-3}$ torr).

39. A method of making an inorganic silicate composite comprising the steps of applying an aqueous slurry of a mixture of an alkali silicate, a reactive acidic glass, water, and, optionally, a clay and/or oxide filler to a reinforcing medium and curing the composite by applying heat at a temperature of 15° C up to 1000°C and a pressure range from a vacuum from ambient to $10^{-3}$ torr, and/or external pressure from ambient to 20,000 psi (137.895 MPa).

40. The method of item 39 wherein the uncured composite is in form of bulk molding compound, sheet molding compound, powder and reinforcement, liquid and reinforcement or prepreg.

41. The method of item 39 wherein the composite is cured preferably at a temperature of 15°C up to 200°C and an external pressure from ambient to 200 psi (1.378 MPa), and optionally under a vacuum from ambient to $10^{-3}$ torr.

42. The method of item 39 wherein the composite is cured using processes which include compression molding, pultrusion, wet layup, filament winding, autoclave vacuum bag processing, non-autoclave vacuum bag processing, vacuum infusion, liquid resin, film infusion or powder infusion, resin transfer molding, extrusion, injection molding, casting, spin casting, trapped elastomer molding and like processes.

43. The method of item 39 wherein the composite is consolidated before and/or during the curing process.

44. The method of item 39 wherein the slurry includes additional filler materials selected from the group consisting of carbon fibers, glass fibers, alkali resistant fibers, organic fibers, ceramic fibers, mineral fibers and metallic fibers.

45. The method of item 39 wherein the slurry includes additional filler materials selected from the group consisting of graphite fibers, E-glass fibers, S-glass fibers, stainless steel fibers, titanium fibers, nickel alloy fibers, aramid fibers, polyethylene fibers, basalt fibers, SiC fibers and BN fibers.

46. The method of item 39 wherein the reinforcing medium is a glass fiber such as an E-glass fiber, S-glass fiber and/or an alkaline resistant fiber.

47. An alkali silicate slurry composition for forming an inorganic polymer network comprising an alkali silicate or a mixture that yields an insitu alkali silicate, a reactive acidic glass, water and optionally a modifier that moderates the gelation of matrix binder suspension and/or a clay and/or oxide filler to enhance physical and thermal properties.

48. The composition ofi tem 47, wherein the gel modifier is an organic acid or organic base.

49. The composition of item 47, wherein said organic acid is an $\alpha$-hydroxyacid and/or a $\beta$-hydroxyacid.

50. The composition of item 47, wherein said organic base is substituted nitrogen organic base.

51. The composition of item 47, wherein said organic base is a substituted pyridine.

52. The composition of item 47, wherein said organic base is quinoline.

53. The composition of item 47, wherein said gel modifier is present in an amount of between 0.0 wt. % and 10 wt. % based upon the total composition.

54. A method of making an inorganic silicate composite comprising the steps of applying an aqueous slurry of a mixture of an alkali silicate, a reactive acidic glass, water and optionally a modifier that moderates the gelation of matrix binder suspension and/or a clay and/or oxide filler to a reinforcing medium and curing the composite by applying heat at a temperature of 15° C up to 1000°C and pressures under vacuum (ambient to $10^{-3}$ torr, e.g. vacuum bagging) and/or external pressure from ambient to 20,000 psi (137.895 MPa).

**Claims**

**1.** An acidic glass comprising the following formula

$$\prod_{k=1}^{n} ((M^{p+})_{q'})(E^{q-})_{p'})_{r_k} \text{ where } \Sigma r_k = 1$$

where M is a main group glass former and a metallic glass modifier, E is an oxygen, chalcogenide and/or a halogen atom, p is the cation valence of M, q is the anion valence of E, q' is number of M cations contained in a network unit, p' is number of E anions contained in a network unit, r is the molar fraction of that network unit, and n is the number of total network units in the reactive acidic glass component.

**2.** The acidic glass of claim 1, wherein M is a main group glass former selected from the group consisting of boron, silicon, phosphorus, sulfur, germanium, arsenic, antimony and metallic glass modifiers such as vanadium (also a glass former), titanium, chromium, manganese, iron, cobalt, nickel, copper, mercury, zinc, tin, lead, aluminum, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, cadmium, lithium, sodium, potassium, rubidium, and cesium.

3. The acidic glass of claim 2, wherein E is oxygen, sulfur, selenium, tellurium, or fluorine.

4. The acidic glass of claim 3, wherein the main group glass former is selected from the group consisting of boron, silicon, phosphorus, sulfur, and metallic glass modifiers such as vanadium, tin, titanium, zinc, lead, aluminum, zirconium, lanthanum, cerium, neodymium, magnesium, calcium, strontium, barium, lithium, sodium, or potassium atoms, and E is an oxygen atom.

5. An acidic glass comprising: the following formula

$$(P_2O_5)_{r_1}(Li_2O)_{r_2}(B_2O_3)_{r_3}$$

where $r_1$ ranges from 0.300-0.800, $r_2$ ranges from 0.050-0.500, $r_3$ ranges from 0.010-0.150, $r_1 + r_2 + r^3 = 1$ and $r_1 > r_2$.

6. An acidic glass comprising: the following formula

$$(P_2O_5)_{r_1} (Li_2O)_{r_2} (B_2O_3)_{r_3}(MgO)_{r_4}(BaO)_{r_5}$$

where $r_1$ ranges from 0.300-0.800, $r_2$ ranges from 0.050-0.500, $r_3$ ranges from 0.010-0.150, $r_4$ ranges from 0.010-0.200, and $r_5$ ranges from 0.010-0.200, $r_1 + r_2 + r_3 + r_4 + r_5 = 1$ and $r_1 > r_2$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4472199 A
- US 4509985 A
- US 4888311 A
- US 5288321 A
- US 5352427 A

- US 5539140 A
- US 5798307 A, Davidovits
- US 4936939 A, Woolum
- US 4284664 A, Rauch